# EUROPEAN PATENT APPLICATION

(11) **EP 3 550 843 A1**
(43) Date of publication of application: **09.10.2019**
(21) Application number: 17889051.3
(22) Date of filing: 21.08.2017
(51) Int. Cl.: H04N 21/23, G06T 7/00

(54) **STREAMING MEDIA TECHNOLOGY-BASED METHOD AND APPARATUS FOR PROCESSING VIDEO DATA**

(30) Priority: 30.12.2016 CN 201611252400
(71) Applicant: Huawei Technologies Co., Ltd., Longgang District Shenzhen, Guangdong 518129 (CN)
(72) Inventor: DI, Peiyun, Shenzhen Guangdong 518129 (CN); XIE, Qingpeng, Shenzhen Guangdong 518129 (CN); CONG, Jing, Shenzhen Guangdong 518129 (CN); MING, Hua, Shenzhen Guangdong 518129 (CN)
(74) Representative: Pfenning, Meinig & Partner mbB
(86) International application number: PCT/CN2017/098291
(87) International publication number: WO 2018/120857

(57) **Abstract**

Embodiments of the present invention provide a streaming technology-based video data processing method and apparatus. The method includes: obtaining a media presentation description, where the media presentation description includes index information of video data; obtaining the video data based on the index information of the video data; obtaining tilt information of the video data; and processing the video data based on the tilt information of the video data. According to the video data processing method and apparatus in the embodiments of the present invention, information received by a client includes tilt information of video data, and the client may adjust a presentation manner of the video data based on the tilt information.

## Description

### TECHNICAL FIELD

The present invention relates to the field of streaming data processing, and in particular, to a streaming technology-based video data processing method and apparatus.

### BACKGROUND

A virtual reality technology is a computer simulation system in which a virtual world can be created and experienced, generates a simulation environment by using a computer, is interactive system simulation of multi-source information fusion for a three-dimensional dynamic scene and entity behaviors, and can immerse users in the environment. VR mainly includes aspects such as environment simulation, sensing, natural skills, and sensing devices. Environment simulation is vivid real-time dynamic three-dimensional images generated by a computer. Sensing mean that ideal VR should include all human senses. In addition to a visual sense generated by a computer graphics technology, there are senses such as hearing, touch, force, and motion, and even smell and taste are included. This is also referred to as multi-sensing. Natural skills are human actions, such as rotation of a human head, or human eye movement, gestures, and other human behaviors. Computers process data corresponding to actions of a participant, respond in real time to inputs by the user, and provide respective feedbacks to five sense organs of the user. Sensing devices are three-dimensional interactive devices. When a VR video (or a 360-degree video or an omnidirectional video (English: Omnidirectional video)) is presented on a head-mounted device and a handheld device, there are only a video image presentation and a related audio presentation of a part corresponding to the head of the user.

With development and improvement of virtual reality (English: virtual reality, VR) technologies, VR video viewing applications, for example, VR video viewing applications with a 360-degree angle of view, are more frequently presented to users. Omnidirectional VR video content covers a full field of view of 360 degrees a user. To provide immersive experience to the viewer, video content presented to the user needs to be forward, to be specific, the video content presented to the user is consistent with natural objects in a vertical direction.

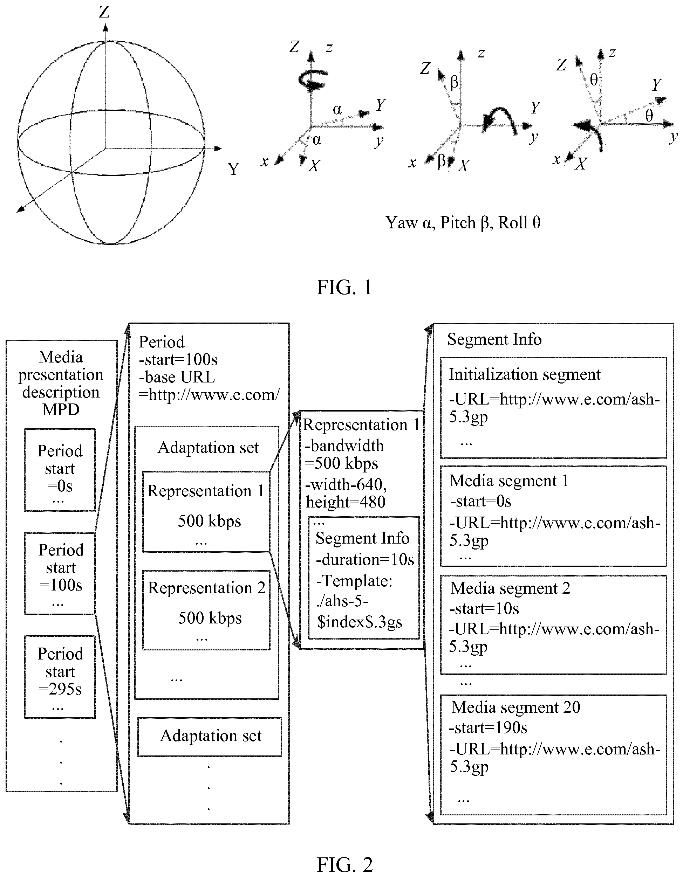

Each existing VR video acquisition device has more than one lens. A plurality of lenses can acquire a plurality of images at a same moment. For example, two fisheye lenses can acquire two images (for example, FIG. 1). A VR image can be obtained by stitching the plurality of images together. During actual shooting, an acquisition device may be tilted due to some reasons. Consequently, a finally acquired video may be tilted, and such a tilt causes discomfort to a viewer.

### SUMMARY

A first aspect of embodiments of the present invention provides a streaming technology-based video data processing method. The method includes: obtaining a media presentation description, where the media presentation description includes index information of video data; obtaining the video data based on the index information of the video data; obtaining tilt information of the video data; and processing the video data based on the tilt information of the video data.

In a possible manner, in this embodiment of the present invention, the processing the video data based on the tilt information of the video data includes: presenting the video data based on the tilt information of the video data or decoding the video data based on the tilt information of the video data.

According to the video data processing method in this embodiment of the present invention, the tilt information is transmitted, so that a client adjusts a processing manner for the video data based on the tilt information.

In a possible implementation, the streaming technology in this embodiment of the present invention is a technology in which a string of media data is compressed and then the data is sent at different times through a network and is transmitted on the network for play by the client. There are two manners for streaming transmission: progressive streaming (Progressive Streaming) and real-time streaming (Realtime Streaming). The Streaming Transport Protocol mainly includes the Hypertext Transfer Protocol (HyperText Transfer Protocol, HTTP), the Real-time Transport Protocol (Real-time Transport Protocol, RTP), the Real-time Transport Control Protocol (Real-time Transport Control Protocol, RTCP), the Resource Reserve Protocol (Resource reserve Protocol), the Real Time Streaming Protocol (Real Time Streaming Protocol, RTSP), the Routing Table Maintenance Protocol (Routing Table Maintenance Protocol, RMTP), and the like.

In a possible implementation, the video data in this embodiment of the present invention may include one or more frames of image data, and may be original data acquired by an acquisition device, or may be data obtained after acquired original data is encoded. In an implementation, acquired original data is encoded by using an encoding standard such as ITU H.264 or ITU H.265. In an implementation, the video data includes one or more media segments (segment). In an example, a server prepares a plurality of versions of bitstreams for same video content, and each version of bitstream is referred to as a representation (representation). The representation is a set and encapsulation of one or more bitstreams in a transmission format. One representation includes one or more segments (segment). Encoding parameters, such as a bit rate and resolution, of different versions of bitstreams may be different, each bitstream is divided into a plurality of small files, and each small file is referred to as a segment. In a process of requesting media segment data, the client may switch between different media. In an example, the server prepares three representations for a movie, including rep1, rep2, and rep3, where rep1 is a high-definition video at a bit rate of 4 MBPS (megabits per second), rep2 is a standard-definition video at a bit rate of 2 MBPS, and rep3 is a standard-definition video at a bit rate of 1 MBPS. Segments of each representation may be stored together in a file in an end-to end manner, or may be separately stored as small files. A segment may be encapsulated in a format in standard ISO/IEC 14496-12 (ISO BMFF (Base Media File Format)), or may be encapsulated in a format (MPEG-2 TS) in ISO/IEC 13818-1.

In an implementation, the video data may alternatively be encapsulated based on a proprietary protocol. Media content within a time length (for example, 5s) may be included, or only media content at some time point (for example, 11:59:10) may be included.

In a possible implementation, the media presentation description in this embodiment of the present invention may be a file including the index information of the video data. The file may be an XML file constructed by using a standard protocol, for example, by using the Hypertext Markup Language (Hypertext Markup Language, HTML); or may be a file constructed by using another proprietary protocol.

In a possible implementation, the media presentation description may be a file obtained based on the MPEG-DASH standard. In November 2011, an MPEG organization authorized the DASH standard. The DASH standard is an HTTP protocol-based technical specification (referred to as a DASH technical specification below) for transmitting a media stream. The DASH technical specification mainly includes two major parts: a media presentation description (English: Media Presentation Description, MPD) and a media file format (English: file format). In the DASH standard, the media presentation description is referred to as an MPD. The MPD may be an XML file, and information in the file is described hierarchically. As shown in FIG. 2, previous-level information is completely inherited by next-level information. In this file, some media metadata is described. The metadata can enable the client to learn of media content information in the server, and can construct, by using the information, an HTTP URL requesting a segment.

In the DASH standard, a media presentation (English: media presentation) is a set of structured data that presents media content. A media presentation description (English: media presentation description) is a file describing a media presentation in a standardized manner, and is used to provide a streaming service. For a period (English: period), a group of continuous periods form an entire media presentation, and periods are characterized by continuity and non-overlapping. A representation (English: representation) encapsulates one or more structured data sets having media content components (separate encoded media types, for example, audio and videos) of descriptive metadata. In other words, a representation is a set or encapsulation of one or more bitstreams in a transmission format, and one representation includes one or more segments. An adaptation set (English: Adaptation Set) represents a set of a plurality of alternative encoding versions of a same media content component, and one adaptation set includes one or more representations. A subset (English: subset) is a combination of a group of adaptation sets, and when a player plays all the adaptation sets, corresponding media content can be obtained. Segment information is a media unit used by an HTTP uniform resource locator in a media presentation description. The segment information describes segments of media data. The segments of the media data may be stored in one file, or may be separately stored. In a possible manner, an MPD stores segments of media data.

In the present invention, for technical concepts related to an MPEG-DASH technology, refer to relevant regulations in ISO/IEC 23009-1:2014 Information technology -- Dynamic adaptive streaming over HTTP (DASH) -- Part 1: Media presentation description and segment formats, or refer to relevant regulations in a historical standard version such as ISO/IEC 23009-1:2013 or ISO/IEC 23009-1:2012.

In a possible implementation, the index information of the video data in this embodiment of the present invention may be a specific storage address, for example, a hyperlink; or may be a specific value; or may be a storage address template, for example, a URL template. In this case, the client may generate a video data obtaining request based on the URL template, and request the video data from a corresponding address.

In a possible implementation, the obtaining the video data based on the index information of the video data in this embodiment of the present invention may include the following implementations:
the media presentation description including the video data, obtaining the corresponding video data from the media presentation description based on the index information of the video data, where in this case, no additional video data obtaining request needs to be sent to the server; or
the index information of the video data being a storage address corresponding to the video data, sending, by the client, the video data obtaining request to the storage address, and then, receiving the corresponding video data, where the request may an HTTP-based obtaining request; or
the index information of the video data being a storage address template of the video data, generating, by the client, the corresponding video data obtaining request based on the template, and then, receiving the corresponding video data, where when generating the video data obtaining request based on the storage address template, the client may construct the video data obtaining request based on information included in the media presentation description, or may construct the video data obtaining request based on information about the client, or may construct the video obtaining request based on transport network information; and the video data obtaining request may be an HTTP-based obtaining request.

In a possible implementation, the tilt information of the video data in this embodiment of the present invention may include at least one piece of the following information: yaw information, pitch information, roll information, and tilt processing manner information.

The tilt information of the video data mainly embodies a difference between a forward angle of the acquisition device and a forward angle of the client device during presentation, or a difference between a preset angle and a forward angle of the client device during presentation, or a rotation angle, pixels, or blocks of a video frame relative to a reference video frame. A yaw, a pitch, and a roll may be used to indicate a posture of an object in an inertial coordinate system, and may also be referred to as Euler angles.

In a possible implementation, information such as the yaw information, the pitch information, and the roll information may be information using an angle as a unit, may be information using a pixel as a unit, or may be data using a block as a unit.

For example, as shown in FIG. 1, the yaw is α, the pitch is β, and the roll (the angle of roll) is θ. In an implementation, forms of expression for the tilt information are as follows:

```
           aligned(8) class positionSample(){
          unsigned int(16) position_yaw;//a tilt yaw
          unsigned int(16) position_pitch;//a tilt pitch
          unsigned int(16) position_roll;//a tilt roll
           }.
```

In an implementation, the tilt processing manner information may include interpolation information and sampling information. The interpolation information may include an interpolation manner, and the sampling information may include a sampling rate and the like. An image acquisition sensor and a tilt data acquisition sensor in the acquisition device may be different sensors, and the sensors may have different sampling frequency. Therefore, if a sampling rate of tilt data and a sampling rate of video data are different, interpolation calculation needs to be performed on the tilt data, to obtain tilt information of video data corresponding to a moment. A manner for the interpolation calculation may be a linear interpolation, a polynomial interpolation, or the like.

In an example, an example of the tilt processing manner information is as follows:

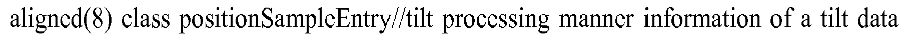

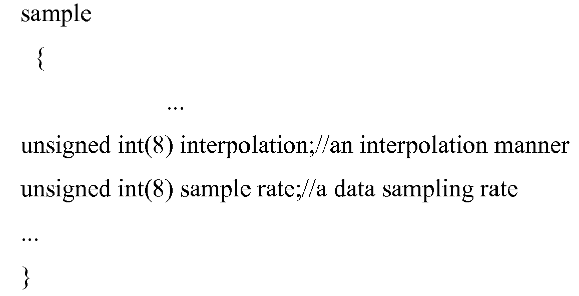

In a possible implementation, the obtaining tilt information of the video data in this embodiment of the present invention may include the following implementations.

1. The tilt information of the video data and the video data are encapsulated into a same bitstream. In this case, the tilt information of the video data may be obtained by using the bitstream of the video data.

In an implementation, the tilt information may be encapsulated into a parameter set of bitstreams, for example, may be encapsulated into a video parameter set (video_parameter_set, VPS), a sequence parameter set (sequence_parameter_set, SPS), a picture parameter set (picture_parameter_set, PPS), or another VR extension-related parameter set.

In an example, the tilt information is described in the PPS as follows:

| | |
|---|---|
| pic_parameter_set_rbsp() { | Descriptor |
| if (position_extension_flag) { | u(1) |
| position_yaw/a tilt yaw | |
| position_pitch/a tilt pitch | |
| position_roll/a tilt roll | |
| } | |
| } | |

In a possible manner, the tilt information is encapsulated into SEI (Supplemental enhancement information).

| | |
|---|---|
| sei_payload (payloadType, payloadSize) { | Descriptor |
| if (payloadType = = position) | |
| position_payload (payloadSize) | |
| } | |

In the foregoing grammar, position represents a specific value, for example, 190, used to indicate that if a type value of the SEI is 190, data in an SEI NALU (Network Abstract Layer Unit, network abstraction layer unit) is the tilt information. The number 190 is only a specific example, and does not constitute any specific limitation to this embodiment of the present invention.

A description method for position_payload (payloadSize) is as follows:

| | |
|---|---|
| position_payload (payloadSize) { | Descriptor |
| position_yaw/a tilt yaw | |
| position_pitch/a tilt pitch | |
| position_roll/a tilt roll | |
| } | |

In a possible manner, the bitstream further includes a tilt information identifier, and the tilt information identifier is used to indicate whether tilt information exists in the bitstream. For example, the tilt information identifier is a flag. When a value of the flag is 1, it indicates that tilt information exists in the bitstream. When the value of the flag is 0, it indicates that no tilt information exists in the bitstream.

In a possible manner, the flag may be described in a video parameter set VPS, an SPS, or a PPS. Specific grammar is as follows: If position_extension_flag = 1, it indicates that bitstream data of each frame includes tilt data of a current frame.

| | |
|---|---|
| video_parameter_set_rbsp/seq_parameter_set_rbsp/pic_parameter_set_rbsp () { | Descriptor |
| position_extension_flag | u(1) |
| } | |

In a possible manner, in addition to being obtained by a sensor or by using a sensor data interpolation, the data may further be obtained by using an encoder during spherical motion estimation, and may be considered as full rotation information of a spherical frame and a reference spherical frame. The rotation information may be a tilt absolute value (tilt information of the spherical frame during acquisition), or may be a relative value (rotation information of a current spherical frame relative to a reference spherical frame in a VR video), or may be a change value of a relative value. This is not specifically limited. A spherical image or a 2D image obtained after spherical mapping may be used during the spherical motion estimation. This is not specifically limited. After obtaining the information, a decoder needs to find a location of reference data in the reference frame by using this value, to complete correct decoding of the video data.

2. The tilt information of the video data is encapsulated into a track (track) independent of the video data.

In an implementation of the present invention, the track is a type of sample sequence having a time attribute in an ISO standard-based media file.

In this case, the client needs to obtain the tilt information of the video data by using the track for transmitting the tilt information or by sending a tilt information obtaining request. In an implementation, the media presentation description includes the index information of the tilt information, and the client may obtain the tilt information of the video data in a manner similar to the foregoing manner of obtaining the video data. In an implementation, the index information of the tilt information may be sent to the client by using a file independent of the media presentation description.

In an example, a description of the tilt information is as follows:

```
           aligned(8) class positionSample(){
          unsigned int(16) position_yaw;//a tilt yaw
          unsigned int(16) position_pitch;//a tilt pitch
          unsigned int(16) position_roll;//a tilt roll
           }.
```

In a possible implementation, the tilt information further includes:

```
           aligned(8) class positionSampleEntry//description information of all tilt information
                {
          unsigned int(16) max_position_yaw;//a maximum tilt yaw
          unsigned int(16) max_position_pitch;//a maximum tilt pitch
          unsigned int(16) max_position_roll;//a maximum tilt roll
           }
```

The client obtains description information in the track of the tilt data. The description information describes a maximum tilt status of the tilt data in the track. The client may apply in advance, based on the maximum tilt status, for maximum calculation space for image processing, to avoid memory space re-application in an image processing process due to a change in the tilt data.

In a possible implementation, the media presentation description includes metadata of the tilt information, and the client may obtain the tilt information of the video data based on the metadata.

In a DASH standard-based example, the metadata of the tilt information added to the MPD is described as follows:

```
             <AdaptationSet [...] ><!-a description of the metadata of the tilt information-->
             <Representation id="12" codec="posm">
                      <BaseURL> Positionmetadate.mp4</BaseURL>
               </Representation>
             </AdaptationSet>
```

Alternatively, the tilt information is described in the MPD.

For example, the tilt information is added to a period layer or an adaptation set layer. A specific example is as follows:
The tilt information is added to the adaptation set layer, to indicate a tilt status of video stream content in an adaptation set:

```
          <AdaptationSet position_yaw="10" position_pitch = "10" position_roll = "10" [...] ><!-
          a description of the tilt information -->
            <Representation id="12" codec="hvc1">
                   <BaseURL>video1.mp4</BaseURL>
            </Representation>
          </AdaptationSet>
```

The tilt information is added to the period layer, to indicate a tilt status of video stream content of a next layer of the period layer:

```
          <period position_yaw="10" position_pitch = "10" position_roll="10" [...] ><!-a
          description of the tilt information -->
           <AdaptationSet id="12" codec="hvc1">
           </AdaptationSet>
          </period>
```

The client may obtain, by parsing the MPD, metadata indicated by the tilt data, construct a URL for obtaining the tilt data, and obtain the tilt data. It may be understood that, the foregoing example is only used to help understand the technical solution of the present invention. The metadata of the tilt information may alternatively be described in a representation or a descriptor of the MPD.

3. The tilt information of the video data is encapsulated into a track (track) of the video data.

In this case, the tilt information of the video data may be obtained by using the track for transmitting the video data.

In an example, the tilt information may be encapsulated into the metadata of the video data.

In a possible implementation, the tilt information may be encapsulated into the media presentation description. In this case, the client may obtain the tilt information by using the metadata of the video data. For example, the tilt information of the video data may be obtained by parsing the media presentation description.

In an example, a sample for adding the tilt information to a video track is described. In this embodiment, a box for describing the tilt information is Positioninfomationbox:

```
          aligned(8) class Positioninfomationbox FullBox('psib', version, 0) {
          unsigned int(16) sample_counter;//a quantity of samples
          for(i=1; i<= sample_counter; i++) {
                 unsigned int(16) position_yaw;//a tilt yaw
                 unsigned int(16) position_pitch;//a tilt pitch
                 unsigned int(16) position_roll;//a tilt roll
          } } or
          aligned(8) class Positioninfomationbox FullBox('psib', version, 0) {
          unsigned int(16) sample_counter;//a quantity of samples
          unsigned int(8) interpolation;//an interpolation manner
          unsigned int(8) samplerate;//a data sampling rate
          for(i=1; i<= sample_counter; i++) {
                 unsigned int(16) position_yaw;//a tilt yaw
                 unsigned int(16) position_pitch;//a tilt pitch
                 unsigned int(16) position_roll;//a tilt roll
          } }
```

According to the video data processing method in this embodiment of the present invention, the tilt data related to the acquisition device is used as metadata for encapsulation. The metadata is more beneficial to VR video presentation of the client. The client may optionally present forward video content or content in an original shooting posture of a photographer, and may calculate a location of a central area of a video acquisition lens in an image by using the data. Therefore, the client may select, based on the principle that different distances between video content and a central location result in different deformations and different resolution of video content, a space area for viewing a video.

A second aspect of the embodiments of the present invention provides a streaming technology-based video data processing apparatus. The apparatus includes: a receiver, where the receiver is configured to obtain a media presentation description, and the media presentation description includes index information of video data, where the receiver is further configured to obtain the video data based on the index information of the video data; and the receiver is further configured to obtain tilt information of the video data; and a processor, where the processor is configured to process the video data based on the tilt information of the video data.

In a possible implementation, the tilt information of the video data includes at least one piece of the following information:
yaw information, pitch information, roll information, or tilt processing manner information.

In a possible implementation, the tilt information of the video data is encapsulated into metadata of the video data.

In a possible implementation, the tilt information of the video data and the video data are encapsulated into a same bitstream.

In a possible implementation, the bitstream further includes a tilt information identifier, and the tilt information identifier is used to indicate whether tilt information exists in the bitstream.

In a possible implementation, the tilt information of the video data is encapsulated into a track (track) independent of the video data.

In a possible implementation, the tilt information of the video data is encapsulated into a track (track) of the video data.

It may be understood that, in examples of specific implementations and related features of the apparatus embodiment of the present invention, the implementations corresponding to the method embodiment may be used. Details are not described herein again.

A third aspect of the embodiments of the present invention discloses a streaming technology-based video data processing method. The method includes:
sending a media presentation description to a client; and
obtaining tilt information of video data, and sending the tilt information of the video data to the client.

In a possible implementation of this embodiment of the present invention, the method further includes: obtaining the video data, and sending the video data to the client.

In a possible implementation of this embodiment of the present invention, the method further includes: receiving a media presentation description obtaining request sent by the client.

In a possible implementation of this embodiment of the present invention, the method further includes: receiving a video data obtaining request sent by the client.

In a possible implementation of this embodiment of the present invention, the obtaining tilt information of video data includes the following possible implementations:
receiving the tilt information of the video data; or
acquiring, by an acquisition device, the tilt information of the video data.

In a possible implementation, the streaming technology in this embodiment of the present invention is a technology in which a string of media data is compressed and then the data is sent at different times through a network and is transmitted on the network for play by the client. There are two manners for streaming transmission: progressive streaming (Progressive Streaming) and real-time streaming (Real-time Streaming). The Streaming Transport Protocol mainly includes the Hypertext Transfer Protocol (HyperText Transfer Protocol, HTTP), the Real-time Transport Protocol (Real-time Transport Protocol, RTP), the Real-time Transport Control Protocol (Real-time Transport Control Protocol, RTCP), the Resource Reserve Protocol (Resource reserve Protocol), the Real Time Streaming Protocol (Real Time Streaming Protocol, RTSP), the Routing Table Maintenance Protocol (Routing Table Maintenance Protocol, RMTP), and the like.

In a possible implementation, the video data in this embodiment of the present invention may include one or more frames of image data, and may be original data acquired by an acquisition device, or may be data obtained after acquired original data is encoded. In an implementation, acquired original data is encoded by using an encoding standard such as ITU H.264 or ITU H.265. In an implementation, video data includes one or more media segments (segment). In an example, a server prepares a plurality of versions of bitstreams for same video content, and each version of bitstream is referred to as a representation (representation). The representation is a set and encapsulation of one or more bitstreams in a transmission format. One representation includes one or more segments (segment). Encoding parameters, such as a bit rate and resolution, of different versions of bitstreams may be different, each bitstream is divided into a plurality of small files, and each small file is referred to as a segment. In a process of requesting media segment data, the client may switch between different media. In an example, the server prepares three representations for a movie, including rep1, rep2, and rep3, where rep1 is a high-definition video at a bit rate of 4 MBPS (megabits per second), rep2 is a standard-definition video at a bit rate of 2 MBPS, and rep3 is a standard-definition video at a bit rate of 1 MBPS. Segments of each representation may be stored together in a file in an end-to end manner, or may be separately stored as small files. A segment may be encapsulated in a format in standard ISO/IEC 14496-12 (ISO BMFF (Base Media File Format)), or may be encapsulated in a format (MPEG-2 TS) in ISO/IEC 13818-1.

In an implementation, video data may alternatively be encapsulated based on a proprietary protocol. Media content within a time length (for example, 5s) may be included, or only media content at some time point (for example, 11:59:10) may be included.

In a possible implementation, the media presentation description in this embodiment of the present invention may be a file including the index information of the video data. The file may be an XML file constructed by using a standard protocol, for example, by using the Hypertext Markup Language (Hypertext Markup Language, HTML); or may be a file constructed by using another proprietary protocol.

In a possible implementation, the media presentation description may be a file obtained based on the MPEG-DASH standard. In November 2011, an MPEG organization authorized the DASH standard. The DASH standard is an HTTP protocol-based technical specification (referred to as a DASH technical specification below) for transmitting a media stream. The DASH technical specification mainly includes two major parts: a media presentation description (English: Media Presentation Description, MPD) and a media file format (English: file format). In the DASH standard, the media presentation description is referred to as an MPD. The MPD may be an XML file, and information in the file is described hierarchically. As shown in FIG. 2, previous-level information is completely inherited by next-level information. In this file, some media metadata is described. The metadata can enable the client to learn of media content information in the server, and can construct, by using the information, an HTTP URL requesting a segment.

In the DASH standard, a media presentation (English: media presentation) is a set of structured data that presents media content. A media presentation description (English: media presentation description) is a file describing a media presentation in a standardized manner, and is used to provide a streaming service. For a period (English: period), a group of continuous periods form an entire media presentation, and periods are characterized by continuity and non-overlapping. A representation (English: representation) encapsulates one or more structured data sets having media content components (separate encoded media types, for example, audio and videos) of descriptive metadata. In other words, a representation is a set or encapsulation of one or more bitstreams in a transmission format, and one representation includes one or more segments. An adaptation set (English: Adaptation Set) represents a set of a plurality of alternative encoding versions of a same media content component, and one adaptation set includes one or more representations. A subset (English: subset) is a combination of a group of adaptation sets, and when a player plays all the adaptation sets, corresponding media content can be obtained. Segment information is a media unit used by an HTTP uniform resource locator in a media presentation description. The segment information describes segments of media data. The segments of the media data may be stored in one file, or may be separately stored. In a possible manner, an MPD stores segments of media data.

In the present invention, for technical concepts related to an MPEG-DASH technology, refer to relevant regulations in ISO/IEC 23009-1:2014 Information technology -- Dynamic adaptive streaming over HTTP (DASH) -- Part 1: Media presentation description and segment formats, or refer to relevant regulations in a historical standard version such as ISO/IEC 23009-1:2013 or ISO/IEC 23009-1:2012.

In a possible implementation, the tilt information of the video data in this embodiment of the present invention may include at least one piece of the following information: yaw information, pitch information, roll information, and tilt processing manner information.

The tilt information of the video data mainly embodies a difference between a forward angle of the acquisition device and a forward angle of the client device during presentation.

In an implementation, forms of expression for the tilt information are as follows:

```
          aligned(8) class positionSample(){
          unsigned int(16) position_yaw;//a tilt yaw
          unsigned int(16) position_pitch;//a tilt pitch
          unsigned int(16) position_roll;//a tilt roll
          }
```

In an implementation, the tilt processing manner information may include interpolation information and sampling information. The interpolation information may include an interpolation manner, and the sampling information may include a sampling rate and the like. An image acquisition sensor and a tilt data acquisition sensor in the acquisition device may be different sensors, and the sensors may have different sampling frequency. Therefore, if a sampling rate of tilt data and a sampling rate of video data are different, interpolation calculation needs to be performed on the tilt data, to obtain tilt information of video data corresponding to a moment. A manner for the interpolation calculation may be a linear interpolation, a polynomial interpolation, or the like.

In an example, an example of the tilt processing manner information is as follows:

```
         aligned(8) class positionSampleEntry//tilt processing manner information of a tilt data
          sample
            { ......
          unsigned int(8) interpolation;//an interpolation manner
          unsigned int(8) sample rate;//a data sampling rate...
          }
```

In this embodiment of the present invention, the sending the tilt information of the video data to the client may include the following implementations:
encapsulating the tilt information of the video data into metadata of the video data; or
encapsulating the tilt information of the video data and the video data into a same bitstream; or
encapsulating the tilt information of the video data into a track (track) independent of the video data; or
encapsulating the tilt information of the video data into a file independent of the video data; or
encapsulating the tilt information of the video data into a track (track) of the video data.

For a specific example of the foregoing implementation, refer to the embodiment of the corresponding part in the embodiment of the first aspect. Details are not described herein again.

A fourth aspect of the embodiments of the present invention discloses a streaming technology-based video data processing apparatus. The apparatus includes:
a sending module, configured to send a media presentation description to a client; and
a tilt information obtaining module, configured to obtain tilt information of video data, where
the sending module is further configured to send the tilt information of the video data to the client.

In a possible implementation of this embodiment of the present invention, the apparatus further includes a video data obtaining module, configured to obtain the video data, and the sending module is further configured to send the video data to the client.

In a possible implementation of this embodiment of the present invention, the apparatus further includes a receiving module, configured to receive a media presentation description obtaining request sent by the client.

In a possible implementation of this embodiment of the present invention, the receiving module is further configured to receive a video data obtaining request sent by the client.

In a possible implementation of this embodiment of the present invention, the obtaining tilt information of video data includes the following possible implementations:
receiving the tilt information of the video data; or
acquiring, by an acquisition device, the tilt information of the video data.

In this embodiment of the present invention, the sending the tilt information of the video data to the client may include the following implementations:
encapsulating the tilt information of the video data into metadata of the video data; or
encapsulating the tilt information of the video data and the video data into a same bitstream; or
encapsulating the tilt information of the video data into a track (track) independent of the video data; or
encapsulating the tilt information of the video data into a file independent of the video data; or
encapsulating the tilt information of the video data into a track (track) of the video data.

For a specific example of the foregoing implementation, refer to the embodiments of the corresponding parts in the embodiment of the third aspect and the embodiment of the first aspect. Details are not described herein again.

It may be understood that, for examples of possible implementations or features of this apparatus embodiment, refer to the embodiment of the third aspect. Details are not described herein again.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may derive other drawings from these accompanying drawings without creative efforts.
FIG. 1 is a schematic diagram of a yaw, a pitch, and a roll according to an embodiment of the present invention;
FIG. 2 is a schematic structural diagram of a media presentation description when streaming transmission is performed based on MPEG-DASH according to an embodiment of the present invention;
FIG. 3 is a schematic flowchart of a streaming technology-based video data processing method according to an embodiment of the present invention;
FIG. 4 is a schematic diagram of an implementation of a streaming technology-based video data processing method according to an embodiment of the present invention; and
FIG. 5 is a schematic structural diagram of a streaming technology-based video data processing apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

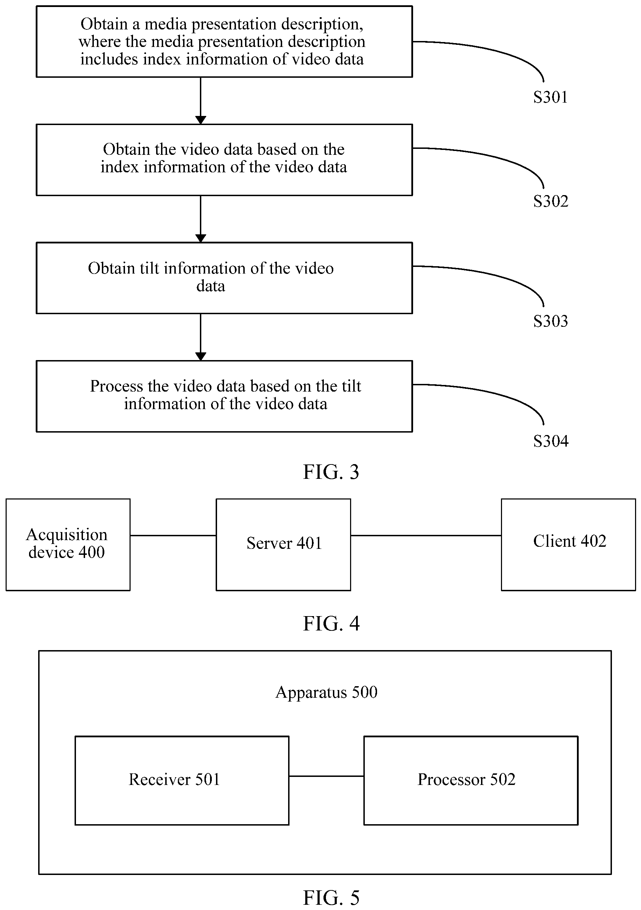

The following describes a streaming technology-based video data processing method according to an embodiment of the present invention with reference to FIG. 3. As shown in FIG. 3, the method includes the following steps.

S301: Obtain a media presentation description, where the media presentation description includes index information of video data.

S302: Obtain the video data based on the index information of the video data.

S303: Obtain tilt information of the video data.

S304: Process the video data based on the tilt information of the video data.

According to the video data processing method in this embodiment of the present invention, the tilt information is transmitted, so that a client adjusts a presentation manner for the video data based on the tilt information.

It may be understood that, the foregoing step order is only an example for helping understand this embodiment of the present invention, instead of a limitation to this embodiment of the present invention. For example, an order of steps S302 and S303 can be reversed.

The following describes an implementation of a streaming technology-based video data processing method according to an embodiment of the present invention with reference to FIG. 4.

As shown in FIG. 4, an acquisition device 400 acquires video data. In this embodiment of the present invention, the acquisition device 400 may be a plurality of camera arrays, or may be scattered cameras. After acquiring original data, the cameras may send the original data to a server 401, and the server encodes the original data; or the video data may be encoded at the acquisition device end, and then the encoded data is sent to the server 401. The acquired data may be encoded by using an existing video coding standard such as ITU H.262, ITU H.264, or ITU H.265, or may be encoded by using a private coding protocol. The acquisition device 400 or the server 401 may stitch images acquired by the plurality of cameras into one image applied to VR presentation, and encode and store the image.

The acquisition device 400 further includes a sensor (for example, a gyroscope), configured to obtain tilt information of the video data. Usually, the tilt information of the video data refers to a tilt status of the acquisition device when the video data is acquired at a moment, to be specific, a yaw, a pitch, and a roll of a primary optical axis of a lens of the acquisition device. The yaw, the pitch, and the roll are also referred to as Euler angles or posture angles of the primary optical axis. After the tilt information of the video data is obtained, the tilt information of the video data is sent to the server 401. In an example, the server 401 may alternatively receive the tilt information of the video data from another server. The tilt information may be information obtained after data filtering or data downsampling is performed on acquired original tilt data.

In an implementation, alternatively, the tilt information of the video data may directly be calculated on a server side. For example, the server 401 obtains the tilt information of the video data based on stored information about the acquisition device or information about the acquisition device received in real time. For example, the server 401 stores tilt information of the acquisition device at various moments, or the server may obtain the tilt information of the video data by processing a real-time status of the acquisition device. The server 401 may obtain status information of the acquisition device 401 by interacting with the acquisition device 400, or may perform processing by using another device (for example, shoot the acquisition device by using another camera, and obtain the tilt information of the acquisition device in a modeling manner). The embodiment of this aspect mainly relates to a transmission manner of the tilt information of the video data, and there is no specific limitation to how the server obtains the tilt information.

In an implementation, alternatively, tilt data of a video frame relative to a reference video frame may be directly calculated on side of an encoder. The tilt data may also be referred to as rotation data or relative rotation data. The encoder may obtain relative offset information of a current VR frame relative to a reference video frame on three axes: x, y, and z through motion search, or may obtain a difference obtained by using the relative rotation data. A motion search method of the encoder is not specifically limited.

In a possible implementation, the tilt information of the video data in this embodiment of the present invention may include at least one piece of the following information: yaw information, pitch information, roll information, and tilt processing manner information.

In a possible implementation, information such as the yaw information, the pitch information, and the roll information may be information using an angle as a unit, may be information using a pixel as a unit, or may be data using a block as a unit.

The tilt information of the video data mainly embodies a difference between a forward angle of the acquisition device and a forward angle of the client device during presentation, or a difference between a preset angle and a forward angle of the client device during presentation, or a rotation angle, pixels, or blocks of a video frame relative to a reference video frame.

In an implementation, forms of expression for the tilt information are as follows:

```
          aligned(8) class positionSample(){
          unsigned int(16) position_yaw;//a tilt yaw
          unsigned int(16) position_pitch;//a tilt pitch
          unsigned int(16) position_roll;//a tilt roll
          }.
```

In an implementation, the tilt processing manner information may include interpolation information and sampling information. The interpolation information may include an interpolation manner, and the sampling information may include a sampling rate and the like. An image acquisition sensor and a tilt data acquisition sensor in the acquisition device 400 may be different sensors, and the sensors may have different sampling frequency. If a sampling rate of tilt data and a sampling rate of video data are different, interpolation calculation needs to be performed on the tilt data, to obtain tilt information of video data corresponding to a moment. A manner for the interpolation calculation may be a linear interpolation, a polynomial interpolation, or the like.

In an example, an example of the tilt processing manner information is as follows:

```
         aligned(8) class positionSampleEntry//tilt processing manner information of a tilt data
          sample
            { ...
          unsigned int(8) interpolation;//an interpolation manner
          unsigned int(8) sample rate;//a data sampling rate...
          }
```

In an implementation, the server 401 generates a media presentation description based on the video data. The media presentation description includes index information of the video data. In a manner, the server 401 may send the media presentation description to a client 402 without obtaining a request of the client 402, and such a manner is mainly applied to a live scenario. In another manner, the server 401 first needs to receive a media presentation description obtaining request sent by the client 402, and then send the corresponding media presentation description to the client 402, and such a manner is mainly applied to a live scenario or an on-demand scenario.

In a possible implementation, the media presentation description in this embodiment of the present invention may be a file including the index information of the video data. The file may be an XML file constructed by using a standard protocol, for example, by using the Hypertext Markup Language (Hypertext Markup Language, HTML); or may be a file constructed by using another proprietary protocol.

In a possible implementation, the media presentation description may be a file obtained based on the MPEG-DASH standard. In November 2011, an MPEG organization authorized the DASH standard. The DASH standard is an HTTP protocol-based technical specification (referred to as a DASH technical specification below) for transmitting a media stream. The DASH technical specification mainly includes two major parts: a media presentation description (English: Media Presentation Description, MPD) and a media file format (English: file format). In the DASH standard, the media presentation description is referred to as an MPD. The MPD may be an XML file, and information in the file is described hierarchically. As shown in FIG. 2, previous-level information is completely inherited by next-level information. In this file, some media metadata is described. The metadata can enable the client to learn of media content information in the server, and can construct, by using the information, an HTTP URL requesting a segment.

In the DASH standard, a media presentation (English: media presentation) is a set of structured data that presents media content. A media presentation description (English: media presentation description) is a file describing a media presentation in a standardized manner, and is used to provide a streaming service. For a period (English: period), a group of continuous periods form an entire media presentation, and periods are characterized by continuity and non-overlapping. A representation (English: representation) encapsulates one or more structured data sets having media content components (separate encoded media types, for example, audio and videos) of descriptive metadata. In other words, a representation is a set or encapsulation of one or more bitstreams in a transmission format, and one representation includes one or more segments. An adaptation set (English: Adaptation Set) represents a set of a plurality of alternative encoding versions of a same media content component, and one adaptation set includes one or more representations. A subset (English: subset) is a combination of a group of adaptation sets, and when a player plays all the adaptation sets, corresponding media content can be obtained. Segment information is a media unit used by an HTTP uniform resource locator in a media presentation description. The segment information describes segments of media data. The segments of the media data may be stored in one file, or may be separately stored. In a possible manner, an MPD stores segments of media data.

In the present invention, for technical concepts related to an MPEG-DASH technology, refer to relevant regulations in ISO/IEC 23009-1:2014 Information technology -- Dynamic adaptive streaming over HTTP (DASH) -- Part 1: Media presentation description and segment formats, or refer to relevant regulations in a historical standard version such as ISO/IEC 23009-1:2013 or ISO/IEC 23009-1:2012.

In a possible implementation, the index information of the video data in this embodiment of the present invention may be a specific storage address, for example, a hyperlink; or may be a specific value; or may be a storage address template, for example, a URL template. In this case, the client may generate a video data obtaining request based on the URL template, and request the video data from a corresponding address.

In a possible implementation, the obtaining, by the client 402, the video data based on the index information of the video data may include the following implementations:
the media presentation description including the video data, obtaining the corresponding video data from the media presentation description based on the index information of the video data, where in this case, no additional video data obtaining request needs to be sent to the server; or
the index information of the video data being a storage address corresponding to the video data, sending, by the client, the video data obtaining request to the storage address, and then, receiving the corresponding video data, where the request may an HTTP-based obtaining request; or
the index information of the video data being a storage address template of the video data, generating, by the client, the corresponding video data obtaining request based on the template, and then, receiving the corresponding video data, where when generating the video data obtaining request based on the storage address template, the client may construct the video data obtaining request based on information included in the media presentation description, or may construct the video data obtaining request based on information about the client, or may construct the video obtaining request based on transport network information; and the video data obtaining request may be an HTTP-based obtaining request.

The client 402 may request the video data from the server 401; or the server 401 or the acquisition device 400 may send the video data to another server or a storage device, and the client 402 requests the video data from the corresponding server or storage device.

In a possible implementation, the obtaining tilt information of the video data in this embodiment of the present invention may include the following implementations.

1. The tilt information of the video data and the video data are encapsulated into a same bitstream. In this case, the tilt information of the video data may be obtained by using the bitstream of the video data.

In an implementation, the tilt information may be encapsulated into a parameter set of bitstreams, for example, may be encapsulated into a video parameter set (video_parameter_set, VPS), a sequence parameter set (sequence_parameter_set, SPS), a picture parameter set (picture_parameter_set, PPS), or a newly extended VR-related parameter set.

In an example, the tilt information is described in the PPS as follows:

| | |
|---|---|
| pic_parameter_set_rbsp() { | Descriptor |
| if(position_extension_ flag) { | u(1) |
| position_yaw/a tilt yaw | |
| position_pitch/a tilt pitch | |
| position_roll/a tilt roll | |
| } | |
| } | |

In a possible manner, the tilt information is encapsulated into SEI (Supplemental enhancement information).

| | |
|---|---|
| sei_payload (payloadType, payloadSize) { | Descriptor |
| if (payloadType = = position) | |
| position_payload (payloadSize) | |
| } | |

In the foregoing grammar, position represents a specific value, for example, 190, used to indicate that if a type value of the SEI is 190, data in an SEI NALU (Network Abstract Layer Unit, network abstraction layer unit) is the tilt information. The number 190 is only a specific example, and does not constitute any specific limitation to this embodiment of the present invention.

A description method for position_payload (payloadSize) is as follows:

| | |
|---|---|
| position_payload (payloadSize) { | Descriptor |
| position_yaw/a tilt yaw | |
| position_pitch/a tilt pitch | |
| position_roll/a tilt roll | |
| } | |

In a possible manner, in addition to being obtained by a sensor or by using a sensor data interpolation, the data may further be obtained by using an encoder during spherical motion estimation, and may be considered as full rotation information of a spherical frame and a reference spherical frame. The rotation information may be a tilt absolute value (tilt information of the spherical frame during acquisition), or may be a relative value (rotation information of a current spherical frame relative to a reference spherical frame in a VR video), or may be a change value of a relative value. This is not specifically limited. A spherical image or a 2D image obtained after spherical mapping may be used during the spherical motion estimation. This is not specifically limited. After obtaining the information, a decoder needs to find a location of reference data in the reference frame by using this value, to complete correct decoding of the video data.

In a possible manner, the bitstream further includes a tilt information identifier, and the tilt information identifier is used to indicate whether tilt information exists in the bitstream. For example, the tilt information identifier is a flag. When a value of the flag is 1, it indicates that tilt information exists in the bitstream. When the value of the flag is 0, it indicates that no tilt information exists in the bitstream.

In a possible manner, the flag may be described in a video parameter set VPS, an SPS, or a PPS. Specific grammar is as follows: If position_extension_flag = 1, it indicates that bitstream data of each frame includes tilt data of a current frame.

| | |
|---|---|
| video_parameter_set_rbsp/seq_parameter_set_rbsp/pic_pa rameter_set_rbsp () { | Descriptor |
| position_extension_flag | u(1) |
| } | |

2. The tilt information of the video data is encapsulated into a track (track) independent of the video data.

In this case, the client needs to obtain the tilt information of the video data by using the track for transmitting the tilt information or by sending a tilt information obtaining request. In an implementation, the media presentation description includes the index information of the tilt information, and the client may obtain the tilt information of the video data in a manner similar to the foregoing manner of obtaining the video data. In an implementation, the index information of the tilt information may be sent to the client by using a file independent of the media presentation description.

In an example, a description of the tilt information is as follows:

```
          aligned(8) class positionSample(){
          unsigned int(16) position_yaw;//a tilt yaw
          unsigned int(16) position_pitch;//a tilt pitch
          unsigned int(16) position_roll;//a tilt roll
          }.
```

In a possible implementation, the tilt information further includes:

```
          aligned(8) class positionSampleEntry//description information of all tilt information
            {
          unsigned int(16) max_position_yaw;//a maximum tilt yaw
          unsigned int(16) max_position_pitch;//a maximum tilt pitch
          unsigned int(16) max_position_roll;//a maximum tilt roll
          }
```

The client obtains description information in the track of the tilt data. The description information describes a maximum tilt status of the tilt data in the track. The client may apply in advance, based on the maximum tilt status, for maximum calculation space for image processing, to avoid memory space re-application in an image processing process due to a change in the tilt data.

In a possible implementation, the media presentation description includes metadata of the tilt information, and the client may obtain the tilt information of the video data based on the metadata.

In a DASH standard-based example, the metadata of the tilt information added to the MPD is described as follows:

```
          <AdaptationSet [...] ><!-a description of the metadata of the tilt information-->
          <Representation id="12" codec="posm">
                   <BaseURL> Positionmetadate.mp4</BaseURL>
            </Representation>
          </AdaptationSet>
```

Alternatively, the tilt information is described in the MPD.

For example, the tilt information is added to a period layer or an adaptation set layer. A specific example is as follows:
The tilt information is added to the adaptation set layer, to indicate a tilt status of video stream content in an adaptation set:

```
          <AdaptationSet position_yaw="10" position_pitch = "10" position_roll = "10" [...] ><!-
          a description of the tilt information -->
            <Representation id="12" codec="hvc1">
                   <BaseURL> video1.mp4</BaseURL>
            </Representation>
          </AdaptationSet>
```

The tilt information is added to the period layer, to indicate a tilt status of video stream content of a next layer of the period layer:

```
          <period position_yaw="10" position_pitch = "10" position_roll="10" [...] ><!-a
          description of the tilt information -->
           < AdaptationSet id="12" codec="hvc1">
           </AdaptationSet>
          </period>
```

It may be understood that, the foregoing example is only used to help understand the technical solution of the present invention. The metadata of the tilt information may alternatively be described in a representation or a descriptor of the MPD.

3. The tilt information of the video data is encapsulated into a track (track) of the video data.

In this case, the tilt information of the video data may be obtained by using the track for transmitting the video data.

In an example, the tilt information may be encapsulated into the metadata of the video data.

In a possible implementation, the tilt information may be encapsulated into the media presentation description. In this case, the client may obtain the tilt information by using the metadata of the video data. For example, the tilt information of the video data may be obtained by parsing the media presentation description.

In an example, a sample for adding the tilt information to a video track is described. In this embodiment, a box for describing the tilt information is Positioninfomationbox:

```
          aligned(8) class Positioninfomationbox FullBox('psib', version, 0) {
          unsigned int(16) sample_counter;//a quantity of samples
          for(i=1; i<= sample_counter; i++) {
                 unsigned int(16) position_yaw;//a tilt yaw
                 unsigned int(16) position_pitch;//a tilt pitch
                 unsigned int(16) position_roll;//a tilt roll
          } }
          or
          aligned(8) class Positioninfomationbox FullBox('psib', version, 0) {
          unsigned int(16) sample_counter;//a quantity of samples
          unsigned int(8) interpolation;//an interpolation manner
          unsigned int(8) samplerate;//a data sampling rate
          for(i=1; i<= sample_counter; i++) {
                 unsigned int(16) position_yaw;//a tilt yaw
                 unsigned int(16) position_pitch;//a tilt pitch
                 unsigned int(16) position_roll;//a tilt roll
               }
```

In an implementation, the tilt information is described in metadata of a video track. Behaviors of the client are as follows:
1. After obtaining the video track, the client first parses the metadata of the track, and in the metadata parsing process, a PSIB box (that is, Positioninfomationbox in the foregoing example) is parsed out.
2. The client may obtain, from the PSIB box, tilt information corresponding to a video image.
3. The client performs angle adjustment or display adjustment on a decoded video image based on the tilt information.

According to the video data processing method in this embodiment of the present invention, the tilt data related to the acquisition device is used as metadata for encapsulation. The metadata is more beneficial to VR video presentation of the client. The client may optionally present forward video content or content in an original shooting posture of a photographer, and may calculate a location of a central area of a video acquisition lens in an image by using the data. Therefore, the client may select, based on the principle that different distances between video content and a central location result in different deformations and different resolution of video content, a space area for viewing a video.

The following describes a streaming technology-based video data processing apparatus 500 according to an embodiment of the present invention with reference to FIG. 5. The apparatus 500 includes: a receiver 501, where the receiver 501 is configured to obtain a media presentation description, and the media presentation description includes index information of video data, where the receiver 501 is further configured to obtain the video data based on the index information of the video data; and the receiver 501 is further configured to obtain tilt information of the video data; and a processor 502, where the processor is configured to present the video data based on the tilt information of the video data.

In a possible implementation, the tilt information of the video data includes at least one piece of the following information:
yaw information, pitch information, roll information, or tilt processing manner information.

In a possible implementation, the tilt information of the video data is encapsulated into metadata of the video data.

In a possible implementation, the tilt information of the video data and the video data are encapsulated into a same bitstream.

In a possible implementation, the bitstream further includes a tilt information identifier, and the tilt information identifier is used to indicate whether tilt information exists in the bitstream.

In a possible implementation, the tilt information of the video data is encapsulated into a track (track) independent of the video data; or
the tilt information of the video data is encapsulated into a file independent of the video data.

In a possible implementation, the tilt information of the video data is encapsulated into a track (track) of the video data.

It may be understood that, in examples of specific implementations and related features of the apparatus embodiment of the present invention, the implementations corresponding to the method embodiment may be used. Details are not described herein again.

It should be noted that, to make the description brief, the foregoing method embodiments are expressed as a series of action combinations. However, a person skilled in the art should appreciate that the present invention is not limited to the described action sequence, because according to the present invention, some steps may be performed in other sequences or performed simultaneously. In addition, a person skilled in the art should also appreciate that all the embodiments described in the specification are example embodiments, and the related actions and modules are not necessarily mandatory to the present invention.

Content such as information exchange and an execution process between the modules in the apparatus and the system is based on a same idea as the method embodiments of the present invention. Therefore, for detailed content, refer to descriptions in the method embodiments of the present invention. Details are not described herein again.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (ROM: Read-Only Memory), or a random access memory (RAM: Random Access Memory).

## Claims

1. A streaming technology-based video data processing method, comprising:
obtaining a media presentation description, wherein the media presentation description comprises index information of video data;
obtaining the video data based on the index information of the video data;
obtaining tilt information of the video data; and
processing the video data based on the tilt information of the video data.

2. The method according to claim 1, wherein the tilt information of the video data comprises at least one piece of the following information:
yaw information, pitch information, roll information, or tilt processing manner information.

3. The method according to claim 1 or 2, wherein the tilt information of the video data is encapsulated into metadata of the video data.

4. The method according to claim 1 or 2, wherein the tilt information of the video data and the video data are encapsulated into a same bitstream.

5. The method according to claim 4, wherein the bitstream further comprises a tilt information identifier, and the tilt information identifier is used to indicate whether tilt information exists in the bitstream.

6. The method according to claim 1 or 2, wherein the tilt information of the video data is encapsulated into a track (track) independent of the video data.

7. The method according to claim 1 or 2, wherein the tilt information of the video data is encapsulated into a track (track) of the video data.

8. A streaming technology-based video data processing apparatus, comprising:
a receiver, wherein the receiver is configured to obtain a media presentation description, and the media presentation description comprises index information of video data, wherein
the receiver is further configured to obtain the video data based on the index information of the video data; and
the receiver is further configured to obtain tilt information of the video data; and
a processor, wherein the processor is configured to process the video data based on the tilt information of the video data.

9. The apparatus according to claim 8, wherein the tilt information of the video data comprises at least one piece of the following information:
yaw information, pitch information, roll information, or tilt processing manner information.

10. The apparatus according to claim 8 or 9, wherein the tilt information of the video data is encapsulated into metadata of the video data.

11. The apparatus according to claim 8 or 9, wherein the tilt information of the video data and the video data are encapsulated into a same bitstream.

12. The apparatus according to claim 11, wherein the bitstream further comprises a tilt information identifier, and the tilt information identifier is used to indicate whether tilt information exists in the bitstream.

13. The apparatus according to claim 8 or 9, wherein the tilt information of the video data is encapsulated into a track (track) independent of the video data.

14. The apparatus according to claim 8 or 9, wherein the tilt information of the video data is encapsulated into a track (track) of the video data.
